Europäisches Patentamt

European Patent Office

Office européen des brevets

(19)

(11) EP 0 933 690 A2

(12) **EUROPEAN PATENT APPLICATION**

(43) Date of publication:
04.08.1999 Bulletin 1999/31

(51) Int. Cl.$^6$: **G05B 19/418**

(21) Application number: 99300767.3

(22) Date of filing: 02.02.1999

(84) Designated Contracting States:
**AT BE CH CY DE DK ES FI FR GB GR IE IT LI LU MC NL PT SE**
Designated Extension States:
**AL LT LV MK RO SI**

(30) Priority: 02.02.1998 GB 9802222

(71) Applicant: **Payne, Richard
Bale, Norfolk NR21 0QS (GB)**

(72) Inventor: **Payne, Richard
Bale, Norfolk NR21 0QS (GB)**

(74) Representative:
**Vleck, Jan Montagu
Reddie & Grose,
16 Theobalds Road
London WC1X 8PL (GB)**

(54) **Apparatus for monitoring throughput**

(57) Apparatus for monitoring the throughput of a food processing line at various different locations and displaying real time throughput information which can be used to optimise production.

Figure 2

## Description

Industrial production of large numbers of units using processing lines is of increasing importance and complexity. For example, the industrial production of pre-packed and prepared foods has grown considerably in the last 10 to 15 years.

Typically, a production or processing line, such as a food processing line, consists of a number of different stations each carrying out a different processing step. These stations may be manual, semi-manual or automatic and the set of stations together makes up a complete production line.

It is clearly desirable to monitor the output and performance of processing lines such as food processing plant. The known systems count the number of units which are produced or processed in a shift or day. This is known as an end line count and is simply a measure of the total production in a shift.

The inventor of the invention described in this application is the first to appreciate that an end line count does not give sufficient or timely enough information on the processing line for efficient line utilisation. The inventor has appreciated that in a processing line having a number of processing stations for processing a stream of discrete units as they pass along the processing line, information on the output and/or status of individual processing stations allows one to make more efficient use of the processing line.

Information on individual processing stations allows one to identify bottle necks or hold-ups in the processing line and focus line improvement efforts on those stations of a processing line which are identified as forming processing and production bottle necks.

Preferably, the information from the processing stations is available in real time so that, if necessary, remedial action may be quickly taken to investigate or eliminate production problems.

The known end time count systems do not allow one to identify the particular station or stations in a processing line which are delaying an otherwise fully operational line. The invention allows one to identify any station or stations which is causing the other stations to operate at less than optimum capacity.

The known end line count systems also only provide processing line information at the end of the shift or day and do not therefore permit swift remedial action to be taken if there is a fault.

The present invention provides a system producing a detailed analysis of the throughput of a processing line. The system provides real time information about the flow, or variations in flow, of individual units throughout their progress down a processing or production line which consists of a number of independent processing stations.

The invention and advantageous features thereof are defined in the claims to which reference is now made.

In a preferred embodiment, the invention includes a line stoppage identifier coupled to the line such that when the line stops it cannot be restarted until the reason for the stoppage is identified.

This allows one to ensure that all line downtime is identified and logged together with the possible cause. It has been found that this significantly improves the completeness of the information captured by the present invention as an operator cannot avoid identifying the cause of a stoppage.

In a preferred embodiment, the invention includes a continuous display of planed and actual production so that an operator can easily identify when there is a discrepancy therebetween and take remedial action.

An embodiment of the invention will now be described with reference to the attached figures in which

FIGURES 1a and 1b illustrates a typical meat processing line embodying the present invention;
FIGURE 2 is a typical line section throughput VDU display from a system embodying the present invention;
FIGURES 3a and 3b illustrate a typical line utilisation history VDU from a system embodying the present invention (single display is shown in two halves with upper 3a and lower 3b parts of single display on separate sheets);
FIGURES 4a and 4b illustrate a typical control panel layout;
FIGURE 5 is a typical cumulative downtime analysis VDU display from a system embodying the present invention;
FIGURE 6 is a line system VDU display from a system embodying the present invention;
FIGURE 7 is a typical line status display from a system embodying the present invention;
FIGURE 8 illustrates a forward planning display from a system embodying the present invention; and
FIGURE 9 is an illustration of typical yield measurements used in a food processing line.

The described embodiment is a meat processing line in which meat or bacon is sliced, sorted, weighed and packaged. It will however be appreciated that the invention includes any processing line in which individual products or units pass down a processing or production line, with a succession of processing stations operating on the individual products or units as they pass along the processing or production line.

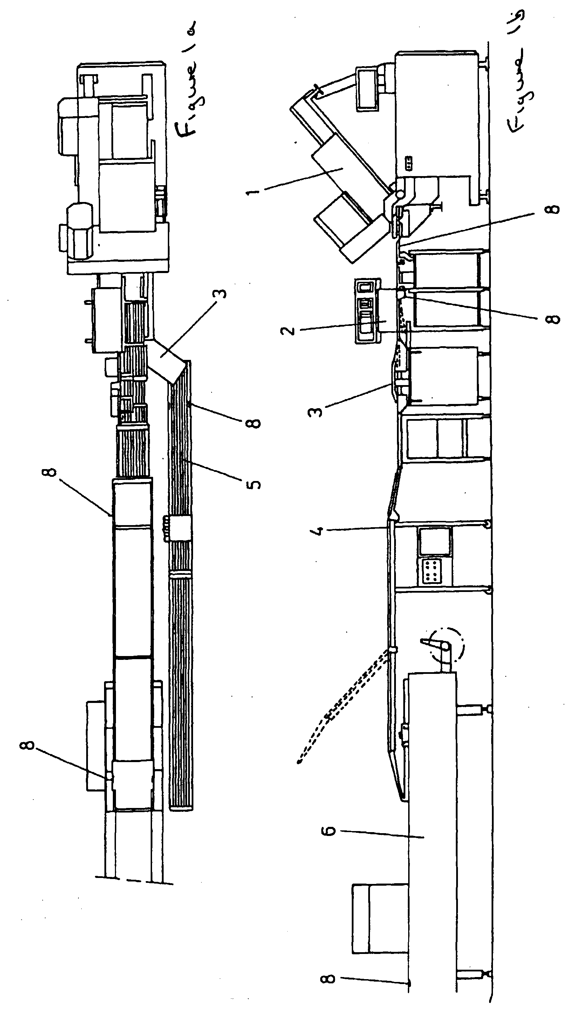

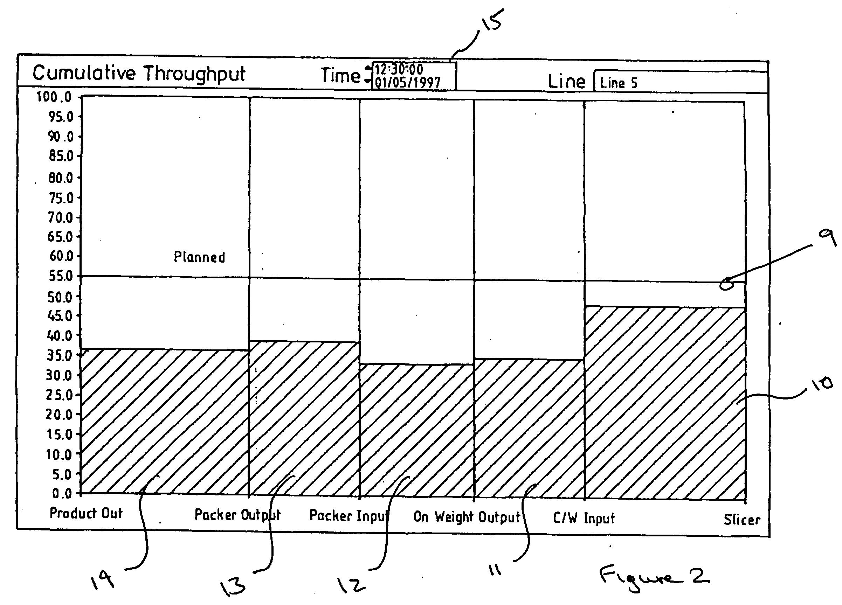

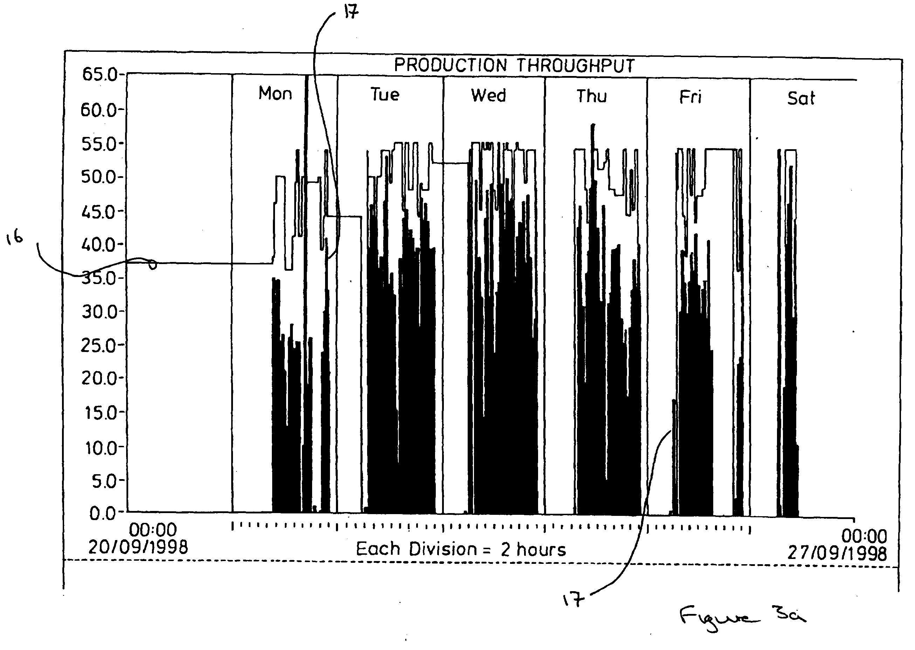

Figures 1(a) and (b) are top and side views respectively of a layout of a typical pre-packed sliced meat (e.g. bacon) line including the present invention.

Meat enters a slicer 1 before passing to a check weigher 2. After passing through the check weigher, sliced and weighed meat is either diverted via a divert conveyor 3 leading to an "off-weight" correction conveyor 5, or runs from the check weigher 2 via an "on-weight" infeed conveyor to a packaging and labelling machine 6.

All stated groups (packs) of slices coming out of the slicer pass over the checkweigher. Those packs that are "correct" or "on" weight pass straight down the main or "onweight" conveyor to the packaging/labelling machine 6. Those packs that are outside a pre-set weight range are automatically diverted to the "off-weight" conveyor. These diverted packs are then manually corrected by adding or subtracting a slice. When corrected, they are placed back on the main or "on-weight" conveyor.

Sensors 8 are located at the different line stations to monitor different processing parameters.

Each meat or bacon packing line is equipped with sensors at strategic positions to continuously monitor line flow and interruptions. These are connected to sealed line control boxes which house the data acquisition equipment. This logs a vast amount of data and transmits this to the system's computer and the VDU (visual display unit) in the production supervisors office. Data is then condensed into easily read bar charts which highlight the variations in throughput and downtime.

At any time any section of the condensed information can be expanded and studied in depth as all throughput stoppages and duration of downtime are logged.

The following description explains the information data acquisition and how it is presented.

## On-line recording and reporting

The start and finish of each shift is recorded together with the potential theoretical production throughput.

For each product, limits of tolerance can be set, so that if the throughput should drop below that level the processing line supervisor is automatically warned at the time and can attend the line.

For example, if the packaging machine is set to run at 60 packs/min, but an efficiency of 80% is accepted in practice, (48 packs/min actual continuous throughput), the monitor will compare cumulative theoretical throughput with cumulative actual throughput every 15 - 30 minutes. When the actual is outside tolerance a red light will flash at the supervisors VDU indicating which line is falling behind.

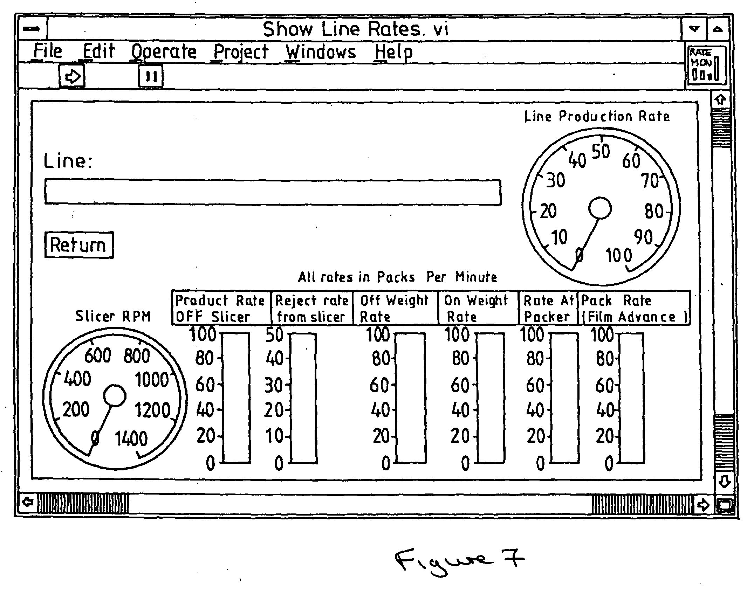

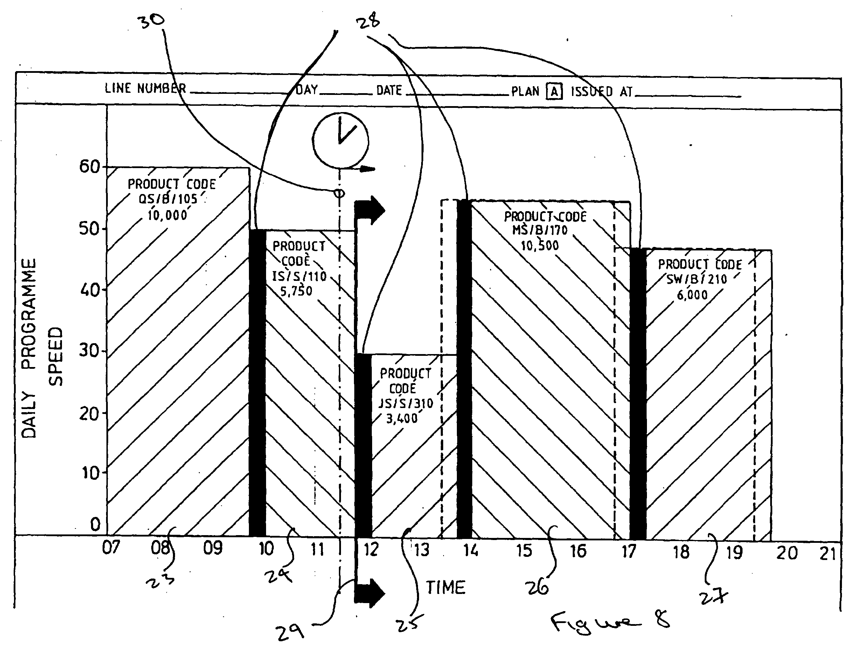

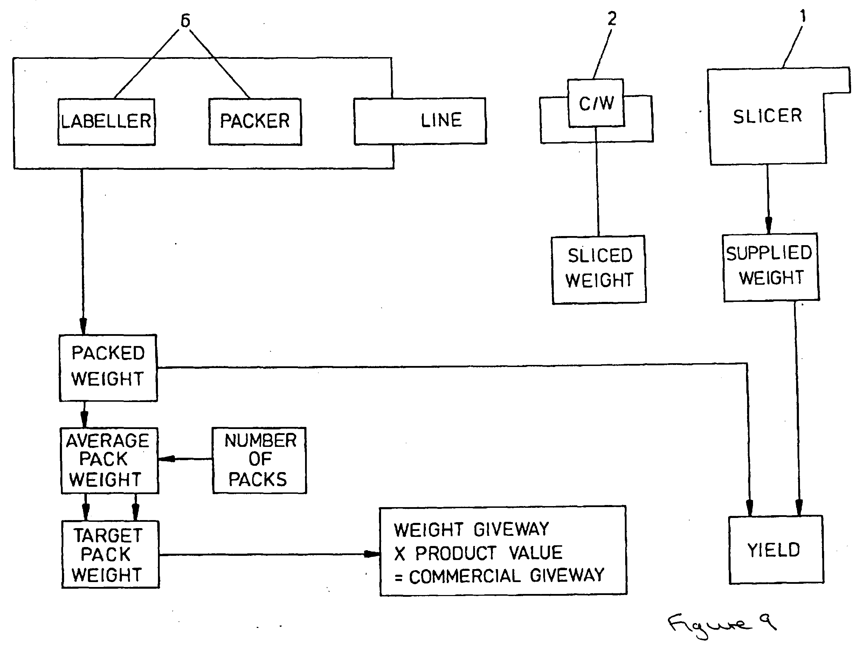

Likewise (see Figure 9) the same procedure can be provided for yield and give way. Yield is defined as:

$$\frac{\text{total weight of prooduct packed}}{\text{total weight of product supplied to the line}}$$

Giveway is the sum total of:

$$\frac{\text{the actual pack weight - the declared pack weight}}{\text{the declared packed weight}}$$

This gives supervisors real time information of performance by exception, and all the time, not at the shift end when it is too late to rectify.

## Constant recording and reporting

For line utilisation monitoring, each line is fitted with a series of sensors and a data acquisition system.

The sensors record:

- The slicer r.p.m.;
- The output from the slicer (in packs/minute);
- The input to the check weigher;
- The on-weight output from the check weigher;
- The off-weight output from the check weigher;
- The input to the on weight conveyor system;
- The input to the packaging machine;
- The output from the packaging machine; and
- The input to any final machinery prior to cartoning.

This information is stored in the data acquisition system, and an update shown on the VDU central system, every 30 minutes.

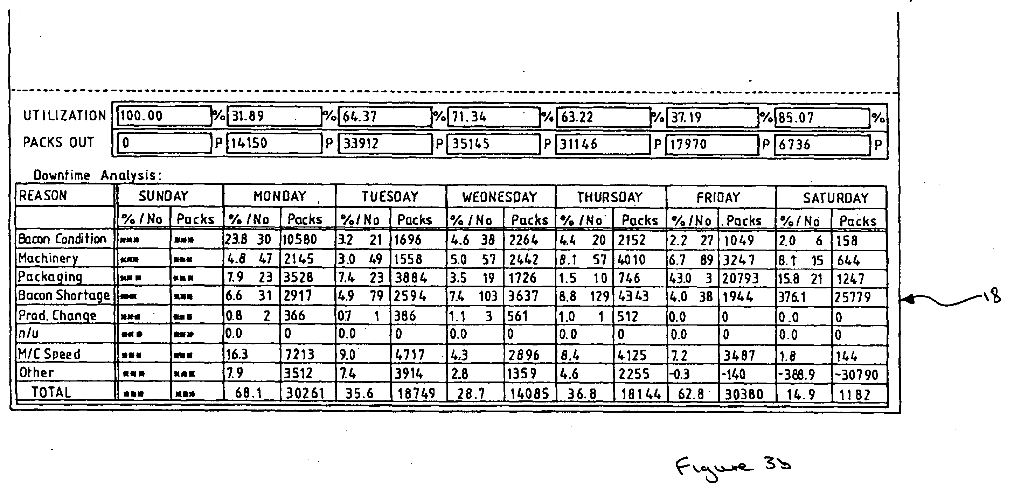

A typical graph is shown in Figure 2. This shows a typical throughput of packs passing each sensor. All the graph bars are updated every 30 minutes, such that the graph shows total packs at each sensor for every 30 minutes divided by 30 to give the average running speed for that particular 30 minutes.

- Planned production in packs/min is shown on the target line 9;

- On the right the first bar 10 shows packs/min leaving the slicer. This is shown as an average rate in packs/min over the previous 30 mins;

- The second bar 11 shows the actual pack rate entering the check weigher; ends and pieces and poor packs having been removed;

- The third bar 12 showing the "on-weight" packs/min going down the mainline

- The fourth bar 13 shows the packs/min entering the packer infeed (make weight packs having been added back); and

- The fifth bar 14 shows the packer output.

The time display 15 at the top shows the date and time under review. The display can be scanned back over 3 months for every half hour display.

The key data, is overall line utilisation. This is taken from either the sensor at the discharge from the packaging machine or the sensor on the final machinery (labeller or metal detector) . The cumulative number of packs is updated every 30 minutes and the information transmitted to the main computer. This information is plotted on a bar chart, against theoretical capacity to give overall line utilisation and total cumulative packs produced per shift.

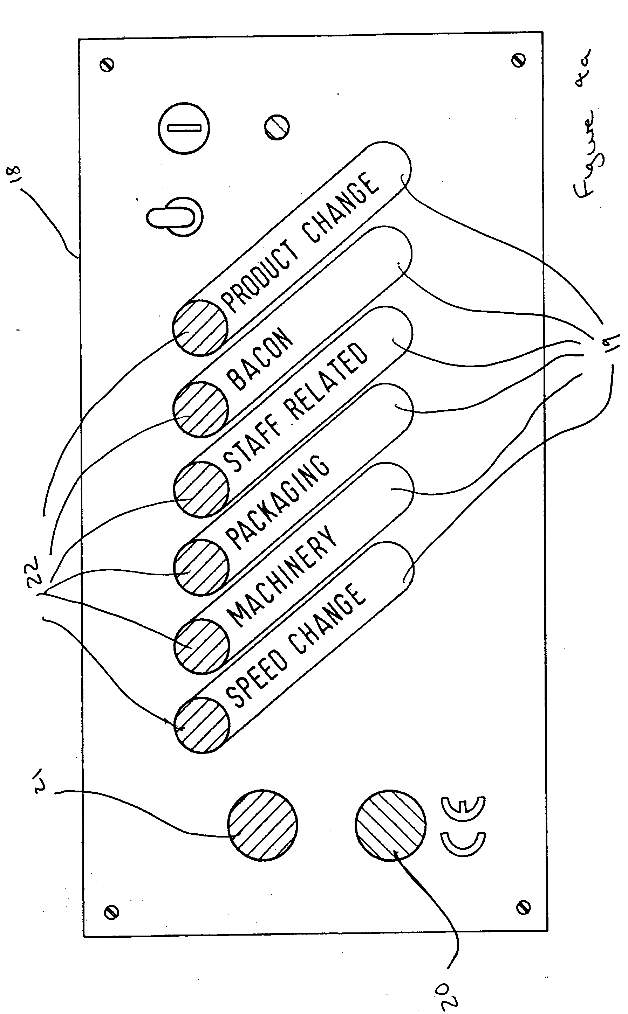

A typical product throughput or line utilisation print-out or display is shown in Figures 3a and 3b. This shows;

- 7 day display (week number can be also displayed but not shown in Figure 3);

- For each day the line 116 is the actual machine speed. This governs the potential theoretical output with the volume of the area under the line 10 giving the potential theoretical throughput for each shift, shift time line is on the x-axis from start up to finish, and the packing speed of the packs in packs per minute is on the y-axis (in this case 55 packs/min);

- Each vertical bar 17 represents the actual average throughput in packs/mins for 30 minutes;

- Utilisation is calculated for each day; and

- A table 18 at the bottom of the display includes a breakdown of the downtime analysis. The determining of the downtime information is discussed below. The display includes downtime both as a percentage of total time and as the number of stoppages.

At any time a computer mouse linked to the system software can be used to select a 30 minute run bar 17 and display its detailed log of stoppage, their duration and reason.

**Reasons for downtime**

The packaging machine 6 on this line is taken as the pacer. When it is stopped the line cannot be restarted without a reason being given as to why it has been stopped.

The control panel 18 prompts the operator or line supervisor to select one of a number of possible downtime reasons and the operating selection is stored by the systems. These possible selections 19 are shown on a control panel mounted to the packaging machine, and used as the line restart buttons by the operator.

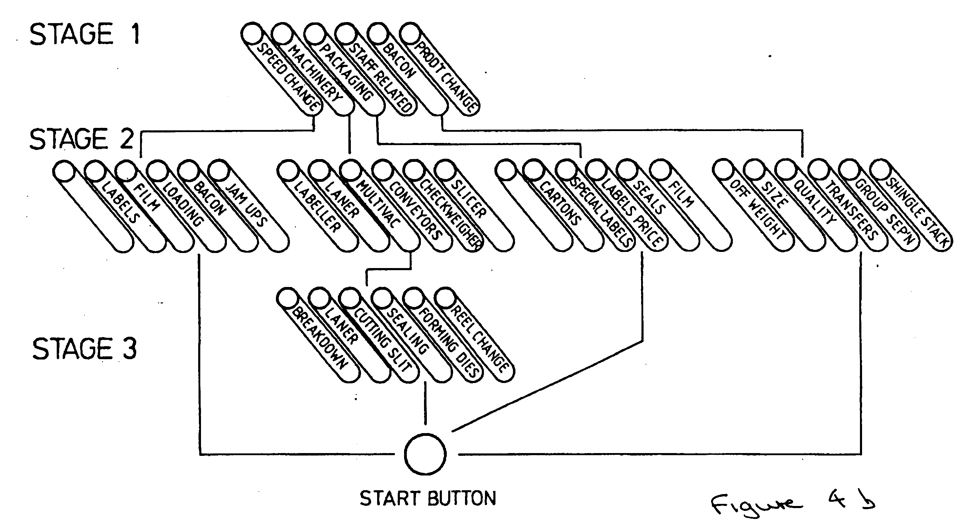

A typical panel layout is shown in Figure 4a and 4b. The panel includes a stop button 20, a restart button 21, six separate displays 19 and six selection buttons 22. Each selection button is associated with one of the displays.

Once an operator has investigated the source of a stoppage he or she presses the selection button next to the respective display 19 corresponding to the reason for the stoppage.

Pressing the button then causes the displays to change to give up to six alternative stoppage reasons all corresponding to the initial selected reason. As illustrated in figure 4b, if "speed change" is initially identified as the source of the stoppage and the appropriate selection button pressed, then the display gives five alternative possible "speed change" stoppage reasons; "labels", "film", "loading", "bacon" or "jam ups"

Figure 4b illustrates how more than two stages of enquiry may be used. The more stages, the more detail may be captured by the system. Figure 4b illustrates how for example detail on a machinery stoppage may be obtained.

The operator just selects "Machinery". He or she is then prompted to indicate which of the machines caused the stoppage. Having selected, say, the "multivac" machine as causing the stoppage, the operation is then prompted to select from six possible multivae machine stoppage reasons. Having selected the appropriate stoppage reason the operator can then restart the line by pressing the re-start part.

The line cannot be restarted until the operator has selected a stoppage reason to the degree of detail allowed by the system. This ensures that all stoppages of the line are logged by the system together with their causes. The hierarchical enquiry sequence of the system also optimises the speed and accuracy with which an operator may inform the system of a stoppage reason.

The stoppage reason is logged together with the time and duration of the stoppage.

-   The panel is normally mounted on the side of the control panel of the packaging machine.

All downtime is logged. The historical line utilisation chart (see Fig. 3) records the total downtime for each reason for each shift.

Each reason is shown as a percentage of total theoretical shift time together with number of potential packages production lost to that reason during the shift.

The total cumulative downtime under each reason, for the year so far, is available as a bar chart so that the cost of these stoppages for the year to date can be seen, and the full cost for the year can be predicted if no improvement is made.

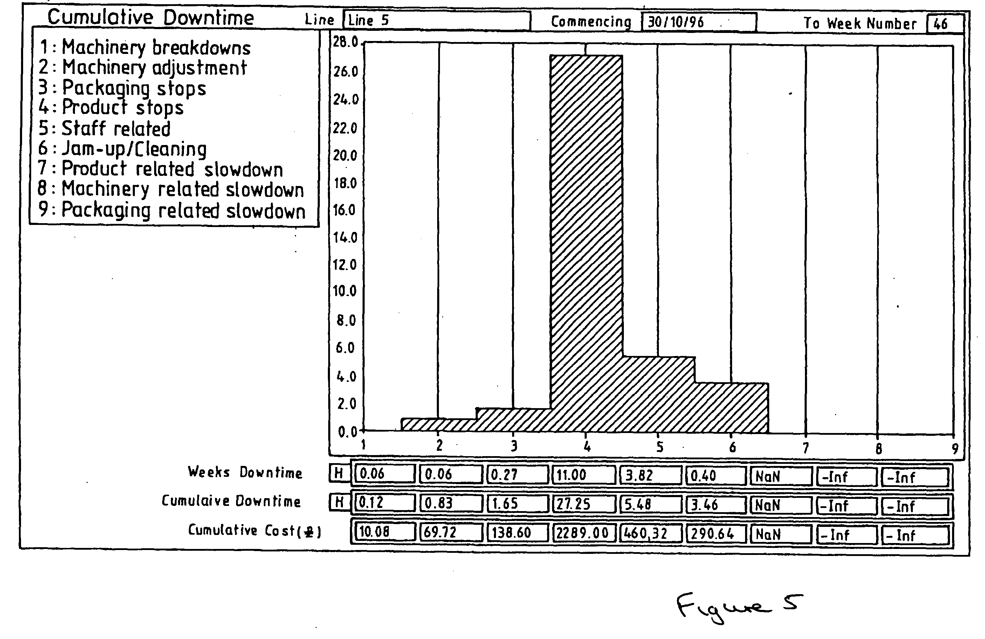

A typical example of a total cumulative downtime bar chart is shown in Figure 5.

The production throughput monitoring system of the present invention can be used to continuously compare actual production against a target production.

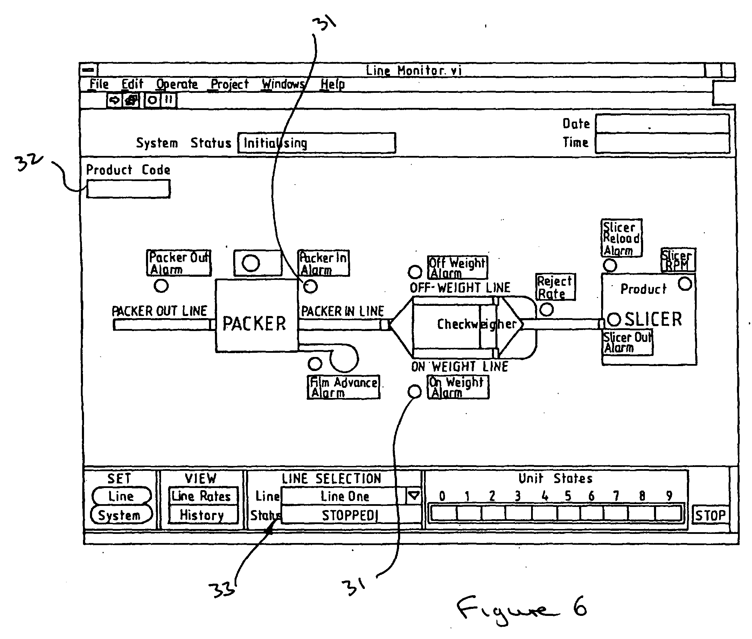

Figure 8 illustrates a display of how during a shift, actual and target production can be compared. An operator of the system defines a planned production

schedule for the day. In the example shown in Figure 8, five different products 23 to 27are to be produced. The display shows the planned production times and speed of the different products 23 to 27and includes pre-determined allowances 28 for product change over on the line between different products.

As the system of the present invention continuously monitors production throughput and output it can continuously compare actual and target throughput. The display shows this by including a line 29 which indicates the actual production achieved at any particular time, and by including a planned production line 30 which indicates the production throughput which is required to match the plan defined before the start of the shift. This line 30 which is essentially a clock or time line can be easily compared to the output line 29 to determine how planned and actual throughput compare.

In the example display of Figure 8, actual production is ahead of planned production. The consequence of this is that the remainder of the planned production program can be brought forward (see vertical dotted lines), new materials need to arrive earlier and the line will have spare capacity at the end of the shift. Had the actual production been behind the planned production, then the remainder of the production program would have to be extended and forewarn of the possible need for overtime. This information allows one to optimise production and line utilisation.

Where there are several lines running, an operator or planner can during the day balance his production lines, seeing immediately where he is likely to have spare capacity and where he is over-running.

## Description of the line

The production utilisation monitoring system of the particular meat processing line described, consists of:-

(In the supervisors Office)

-   Windows 3.1 or higher;

-   Data acquisition/logging system and software based on Windows;

-   A colour printer;

(For each processing line)

- Stainless steel cabinet, housing data acquisition equipment and modules;

- Sealed push button restart panel;

- Connection to 5-net data highway allowing a number of lines to be connected to the supervisors main computer; and

- Series of sensors and reflectors to detect pack throughput, mounted to the conveyor frame.

The standard display on the desktop screen will be the line system shown in Figure 6.

When the line is running the system, simulated packs move down the line on the screen. When the line is stopped, the alarm lights 31 flash at each sensor point. The product being sliced is given a code number and all the relevant information to that product noted and stored for future reference.

The product code number 32 is shown in the top left hand corner. The top right hand corner displays date and time.

Line selection 33 (at the bottom of the screen) shows the line status of the selected line. One of up to ten lines can be reviewed by using a mouse to select the line number under the Unit Status.

When this particular line being displayed stops the status of the line selection field 33 bar flashes "stopped". If any line stops, the line number is illuminated. If any line throughput drops below the targeted output, the line number also flashes.

Moving the mouse to "VIEW" any one of up to ten line status can be viewed as shown in Figure 7.

Initially this displays the key information of line utilisation shown in Fig. 3. Scrolling will display the cumulative line throughput shown in Fig.2. Scrolling further will then display the cumulative reasons for downtime in Fig.5. Print outs of each can be taken by using the mouse to instruct 'print'.

## Optional Information

In addition to the utilisation, monitoring of product weights and yields can be included, depending on the check weights information and compatibility (Generally RS 232).

Fig.6 page shows the key weight system. The key recording weights are:

- Weight into the slicer;
- Sliced weight out of the slicer;
- Actual packed weight; and
- Theoretical packed weight.

Throughput then can be deduced in real time throughout the shift, and will normally be up-dated every 30 minutes, particularly:-

- Yield
- Giveway

### Claims

1. Apparatus for monitoring throughput of discrete units being processed by a processing line having a number of separate processing stations and transport means for transporting units to be, or being, processed, between successive processing stations,

   the apparatus including at least two sensors for sensing unit throughput at different locations on the processing line, the at least two sensors being coupled to a central data processing device and associated display, whereby the sensed processing parameters are communicated to the central data processing device for simultaneous and/or subsequent data processing and/or display.

2. Apparatus according to claim 1 further including means for adjusting the operation of a particular processing station in response to the sensed throughput.

3. Apparatus according to each preceding claim wherein each processing station has an associated sensor for sensing its output.

4. Apparatus according to any preceding claim including means for communicating the causes of processing line events to the central data processing device for simultaneous and/or subsequent data processing and/or display.

5. Apparatus according to claim 4 including a display of a plurality of possible processing line events means for selecting one of said plurality of displayed possible events, and means for communicating said selection to the central data processing device.

6. Apparatus according to claim 5 wherein after a line stoppage, the line cannot be re-started until the reason for the stoppage is communicated to the central data processing device.

7. Apparatus for monitoring a food processing line diagnostic apparatus according to any of claims 1 to 6.

8. A method of monitoring the throughput of discrete units along a processing line comprising a number of processing stations, including the steps of :

    sensing throughput at different locations on the processing line;
    communicating the sensed throughput data to a central data processing device; and
    manipulating and/or displaying the sensed throughput data.

9. The method of claim 8 includes the step of adjusting a processing station in response to sensed and displayed throughput data.

10. The method of claim 8 or claim 9, wherein the state and/or output of each processing station is sensed.

11. The method of any of claims 8 to 10, including the step of communicating the causes of processing line events to the central data processing device.

12. A method according to any of claims 11 including the steps of displaying a plurality of possible processing line events when the processing line stops, selecting one of said displayed possible events and communicating said selection to the central data processing device.

13. A method according to any of claims 8 to 12, of determining the throughput of a food processing line.

Figure 1a

Figure 1b

EP 0 933 690 A2

Cumulative Throughput    Time : 12:30:00 01/05/1997    Line | Line 5

100.0
95.0
90.0
85.0
80.0
75.0
70.0
65.0
60.0
55.0
50.0
45.0
40.0
35.0
30.0
25.0
20.0
15.0
10.0
5.0
0.0

Planned

Product Out    Packer Output    Packer Input    On Weight Output    C/W Input    Slicer

Figure 2

PRODUCTION THROUGHPUT

Each Division = 2 hours

00:00
20/09/1998

00:00
27/09/1998

Figure 3a

EP 0 933 690 A2

EP 0 933 690 A2

| UTILIZATION | 100.00 | % | 31.89 | % | 64.37 | % | 71.34 | % | 63.22 | % | 37.19 | % | 85.07 | % |
| PACKS OUT | 0 | P | 14150 | P | 33912 | P | 35145 | P | 31146 | P | 17970 | P | 6736 | P |

Downtime Analysis:

| REASON | SUNDAY | | MONDAY | | | TUESDAY | | | WEDNESDAY | | | THURSDAY | | | FRIDAY | | | SATURDAY | | |
|---|---|---|---|---|---|---|---|---|---|---|---|---|---|---|---|---|---|---|---|---|
| | % / No | Packs | % / No | | Packs | % / No | | Packs | % / No | | Packs | % / No | | Packs | % / No | | Packs | % / No | | Packs |
| Bacon Condition | *** | *** | 23.8 | 30 | 10580 | 3.2 | 21 | 1696 | 4.6 | 38 | 2264 | 4.4 | 20 | 2152 | 2.2 | 27 | 1049 | 2.0 | 6 | 158 |
| Machinery | *** | *** | 4.8 | 47 | 2145 | 3.0 | 49 | 1558 | 5.0 | 57 | 2442 | 8.1 | 57 | 4010 | 6.7 | 89 | 3247 | 8.1 | 15 | 644 |
| Packaging | *** | *** | 7.9 | 23 | 3528 | 7.4 | 23 | 3884 | 3.5 | 19 | 1726 | 1.5 | 10 | 746 | 43.0 | 3 | 20793 | 15.8 | 21 | 1247 |
| Bacon Shortage | *** | *** | 6.6 | 31 | 2917 | 4.9 | 79 | 2594 | 7.4 | 103 | 3637 | 8.8 | 129 | 4343 | 4.0 | 38 | 1944 | 376.1 | | 25779 |
| Prod. Change | *** | *** | 0.8 | 2 | 366 | 0.7 | 1 | 386 | 1.1 | 3 | 561 | 1.0 | 1 | 512 | 0.0 | | 0 | 0.0 | | 0 |
| n/u | *** | *** | 0.0 | | 0 | 0.0 | | 0 | 0.0 | | 0 | 0.0 | | 0 | 0.0 | | 0 | 0.0 | | 0 |
| M/C Speed | *** | *** | 16.3 | | 7213 | 9.0 | | 4717 | 4.3 | | 2896 | 8.4 | | 4125 | 7.2 | | 3487 | 1.8 | | 144 |
| Other | *** | *** | 7.9 | | 3512 | 7.4 | | 3914 | 2.8 | | 1359 | 4.6 | | 2255 | -0.3 | | -140 | -388.9 | | -30790 |
| TOTAL | *** | *** | 68.1 | | 30261 | 35.6 | | 18749 | 28.7 | | 14085 | 36.8 | | 18144 | 62.8 | | 30380 | 14.9 | | 1182 |

18

Figure 3b

Figure 4a

PRODUCT CHANGE

BACON

STAFF RELATED

PACKAGING

MACHINERY

SPEED CHANGE

STAGE 1

- PRODT CHANGE
- BACON
- STAFF RELATED
- PACKAGING
- MACHINERY
- SPEED CHANGE

STAGE 2

- SHINGLE STACK
- GROUP SEP'N
- TRANSFERS
- QUALITY
- SIZE
- OFF WEIGHT

- FILM
- SEALS
- LABELS PRICE
- SPECIAL LABELS
- CARTONS

- SLICER
- CHECKWEIGHER
- CONVEYORS
- MULTIVAC
- LANER
- LABELLER

- JAM UPS
- BACON
- LOADING
- FILM
- LABELS

STAGE 3

- REEL CHANGE
- FORMING DIES
- SEALING
- CUTTING SLIT
- LANER
- BREAKDOWN

START BUTTON

Figure 4

13

EP 0 933 690 A2

**Cumulative Downtime**    Line | Line 5    Commencing | 30/10/96    To Week Number | 46

1: Machinery breakdowns
2: Machinery adjustment
3: Packaging stops
4: Product stops
5: Staff related
6: Jam-up/Cleaning
7: Product related slowdown
8: Machinery related slowdown
9: Packaging related slowdown

| | 1 | 2 | 3 | 4 | 5 | 6 | 7 | 8 | 9 |
|---|---|---|---|---|---|---|---|---|---|
| Weeks Downtime | H 0.06 | 0.06 | 0.27 | 11.00 | 3.82 | 0.40 | NaN | -Inf | -Inf |
| Cumulaive Downtime | H 0.12 | 0.83 | 1.65 | 27.25 | 5.48 | 3.46 | NaN | -Inf | -Inf |
| Cumulative Cost(£) | 10.08 | 69.72 | 138.60 | 2289.00 | 460.32 | 290.64 | NaN | -Inf | -Inf |

Figure 5

EP 0 933 690 A2

31

32

Line Monitor. vi

File  Edit  Operate  Project  Windows  Help

Date
Time

System  Status  Initialising

Product Code

Slicer
Reload
Alarm

Packer Out
Alarm

Packer In
Alarm

Off Weight
Alarm

Slicer
RPM

OFF-WEIGHT LINE

Reject
Rate

Product

PACKER OUT LINE

PACKER

PACKER IN LINE

Checkweigher

SLICER

Slicer Out
Alarm

ON WEIGHT LINE

Film Advance
Alarm

On Weight
Alarm

| SET | VIEW | LINE SELECTION | Unit States | |
|---|---|---|---|---|
| Line | Line Rates | Line | Line One | 0  1  2  3  4  5  6  7  8  9 | |
| System | History | Status | STOPPED | | STOP |

33

31

Figure 6

Figure 7

Figure 8

Figure 9

EP 0 933 690 A2